# EUROPEAN PATENT APPLICATION

(11) **EP 4 663 477 A1**
(43) Date of publication of application: **17.12.2025**
(21) Application number: 25181413.3
(22) Date of filing: 06.06.2025
(51) Int. Cl.: B60P 3/39

(54) **LIFTABLE BED OF A RECREATIONAL VEHICLE**

(30) Priority: 11.06.2024 IT 202400013309
(71) Applicant: LCI Italy S.r.l., 50026 San Casciano in Val di Pesa (FI) (IT)
(72) Inventor: ROMAGNOLI, Fabio, Greve in Chianti (FLORENCE) (IT); GOZZI, Luigi, San Gimignano (SIENA) (IT)
(74) Representative: Firmati, Leonardo

(57) **Abstract**

Liftable bed (1) of a recreational vehicle, comprising a base (3) that can be moved between a lowered position and a raised position; movement means (4) for moving said base (3) and a battery (5) for powering said movement means (4).

## Description

The present invention relates to a liftable bed for recreational vehicle.

More specifically, the present invention refers to the sector of vans, mini-vans, campers, vans, trailers, caravans or similar, also known as 'recreational vehicles', meaning they are designed for leisure and contain habitable space.

It is to be understood that the liftable bed, which is the object of the present invention, can be used in any habitable space, in particular if of limited dimensions, such as for example tiny-houses or micro-home.

In such cases, the habitable space is usually limited, and therefore the need is felt to increase the available volume as much as possible.

This is especially true in height: i.e., having as much space as possible improves the liveability and comfort of the living space.

In this way, the occupants of the passenger compartment are not forced to lower their heads, or to be careful so as not to hit wall units or furnishing elements, for example, stored on the ceiling of the living space.

In this regard, there is a need to have beds suitable for improving, in addition to the liveability, the safety of the space available inside a recreational vehicle.

The known beds, in relation to the recreational vehicle sector, have a structure tied to a wall of the recreational vehicle, for example represented by a pair of uprights, and a bed base that can be moved along these uprights between a raised position, of non-use, to a lowered position in which the bed is usable for a user.

The aforementioned base, in the known beds, is moved by means of a special motor, powered by the vehicle's service battery.

The motor is therefore generally connected, by means of special wiring, to the service battery.

The known liftable beds represent a good solution to integrate into recreational vehicles, but they are certainly not free from drawbacks.

A first drawback is that these known beds do not always ensure optimal use of available space.

In particular, the presence of the wiring required to connect the bed motor to the service battery is generally undesirable, both in terms of space usage and aesthetics.

Another drawback of known liftable beds is that they are not always practical and economical to produce. This is due to the fact that the installation of such wiring is not always simple and requires the use of materials that increase the manufacturing costs.

It is therefore an object of the present invention to provide a liftable bed for a recreational vehicle that is able to solve the aforementioned drawbacks of the state of the art.

Another object of the present invention is to provide a liftable bed for a recreational vehicle that optimizes space usage and minimizes or eliminates the presence of wiring inside the vehicle.

Another object of the present invention is to provide a liftable bed for a recreational vehicle that is simple and economical to produce.

Another object of the present invention is to provide a liftable bed for a recreational vehicle that is able to guarantee an optimal aesthetic appearance, avoiding the presence of visually unpleasant components.

According to the present invention, these and other objects are achieved by a liftable bed of a recreational vehicle having the technical characteristics described in the attached claims.

The technical characteristics of the invention, according to the above objects, are clearly described in the attached claims and its advantages appear evident from the detailed description that follows, with reference to the attached drawings that illustrate some purely exemplifying and non-limiting embodiments thereof, in which:
- Figure 1 illustrates a schematic view in perspective from above of a liftable bed of a recreational vehicle according to the present invention;
- Figure 2 illustrates a schematic view in perspective from above of the bed of Figure 1, in which such bed has been deprived of some components;
- Figure 3 illustrates a schematic view in perspective from below of a detail of the liftable bed object of the present invention;
- Figure 4 illustrates a schematic view in perspective from below of a detail of the liftable bed object of the present invention, according to a particular embodiment.

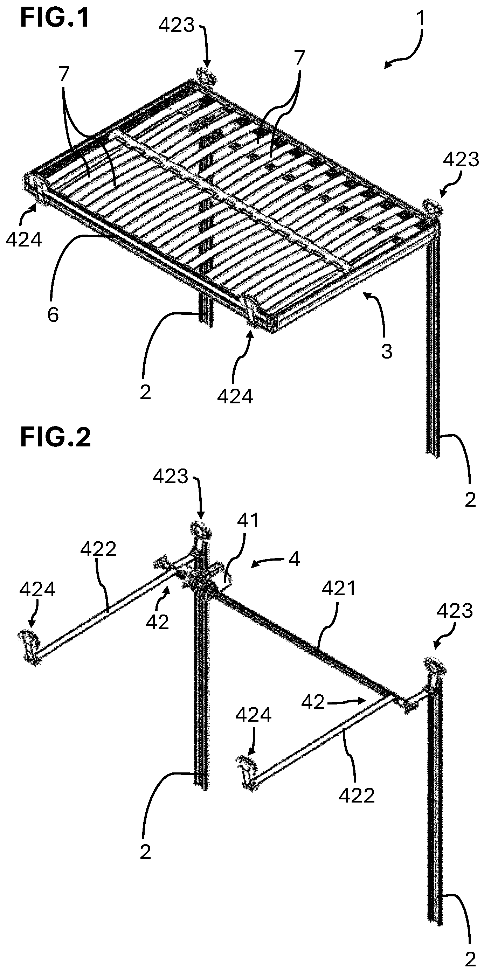

With reference to the attached figure 1, the reference number 1 indicates a liftable bed of a recreational vehicle according to the present invention, hereinafter also referred to simply as bed 1.

As explained in the introductory part of the discussion, a recreational vehicle means a vehicle suitable for leisure and such as to include an habitable space, such as for example a van, mini-van, camper, panel van or similar.

The bed 1 comprises a base 3 that can be moved between at least one lowered position and a raised position. The bed 1 object of the present invention, comprises support and stabilization means to support the base 3 and stabilize it with respect to a wall of the recreational vehicle.

Advantageously, the support and stabilization means comprise at least two belts 422.

It is understood that the present solution could provide for the presence of ropes or cables as an alternative to the aforementioned belts 422.

Such belts 422 are configured to assist the translation of the base 3 between the aforementioned lowered and raised positions.

Each of the belts 422 is partially wrapped around a transmission shaft 421 (introduced more clearly later in the discussion) and constrained on a first end 423 to a wall of the recreational vehicle and on a second end 424 to a portion of the base 3 opposite the wall of the recreational vehicle.

According to the embodiment illustrated in the attached figures, the support and stabilization means advantageously comprise two uprights integral with the recreational vehicle.

The two uprights 2 are installed inside the living space of the recreational vehicle. The base 3 is slidably engaged with these uprights. To this end, the two uprights 2 each have a respective rail, to allow the translation of the base 3.

The base 3 is therefore movable between at least one lowered position and at least one raised position. Advantageously, when the base 3 is in the lowered position, it is usable by a user; when in the raised position, its footprint is minimized, allowing optimal travel conditions.

Advantageously, the base 3 comprises a closed-ring profile 6.

Such profile 6 makes it possible to define the space needed to accommodate a mattress (not shown), to be placed on the plurality of slats 7 (introduced later in the discussion).

Advantageously, the bed 1 object of the present invention comprises a slat-holder device configured to be constrained to the profile 6 of the base 3. Advantageously, furthermore, the bed 1 comprises a plurality of slats 7 suitable for being constrained to the slat-holder device.

Substantially, the slat-holder device ensures that the slats 7 themselves remain in position, to define a support surface for the mattress, not illustrated. Alternatively, the support surface for the relative mattress is defined by metal nets or by panels made of wood, carbon or similar.

The bed 1 comprises movement means 4 for moving the base 3 to move it between the aforementioned lowered and raised positions.

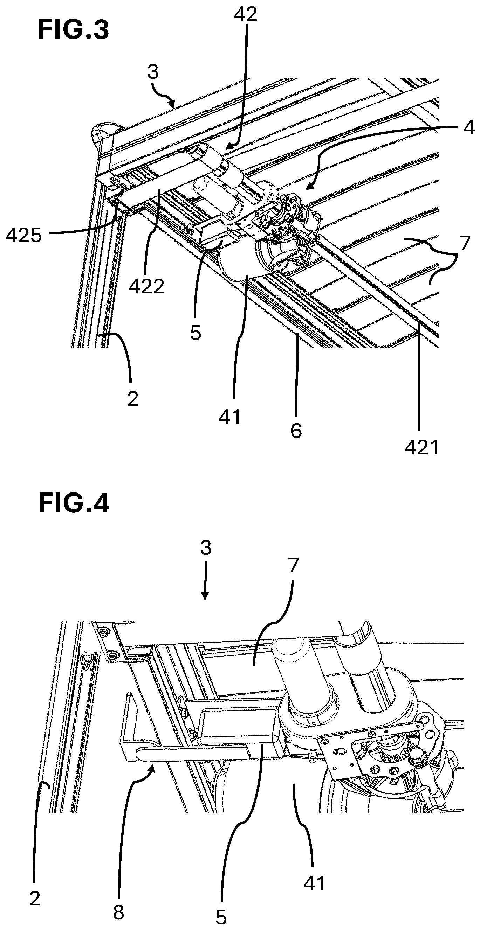

With reference to the attached figures 3 and 4, the bed 1 object of the present invention comprises a battery 5 for powering the movement means 4.

The battery 5 is arranged directly on the base 3 of the bed 1 and can be stably fixed to it by means of relative hooks not shown in the figures.

Essentially, the battery 5 is integral with the moving part of the bed.

Essentially, the battery 5 is integrated into the bed 1 object of the present invention.

This allows to generate a bed system independent from external batteries such as for example the service battery of the recreational vehicle.

The elimination of dependence on the vehicle's service battery for moving the bed therefore solves the problem of encumbrances while also offering optimized freedom of design and installation of the bed inside the passenger compartment.

In other words, the present solution allows for greater flexibility in optimizing the internal layout of a vehicle, enabling the bed to be positioned where most appropriate without the need to lay dedicated power cables-often of significant cross-section-through the passenger compartment.

Integrating a battery (5) directly on the base (3), thereby creating an independent bed system, makes it therefore possible to eliminate unnecessary wiring inside the recreational vehicle, unlike in the prior art where the bed movement means are connected to the vehicle's service battery.

This approach optimizes space requirements and manufacturing costs, while also increasing the overall safety and reliability of the bed system, as it is no longer subject to the risk of accidental damage or wear of any wiring.

With reference to the attached figures 3 and 4, the movement means 4 comprise a motor 41 operationally connected to the battery 5 and powered by it.

The movement means 4 comprise motion transmission means 42.

Such motion transmission means 42 are operationally connected to the motion 41 and able to move the base 3 on the two uprights 2.

Advantageously, the transmission means 42 comprise a transmission shaft 421.

As specified above, the shaft 421 is operationally connected to the aforementioned belts 422, which are at least partially wrapped around it.

Essentially, the movement of the shaft 421 involves the winding/unwinding of the belts 422 during the raising/lowering of the base 3.

Advantageously, the bed 1 object of the present invention includes means for locking the base 3 so as to stabilize it with respect to the wall of the recreational vehicle when said base is in a lowered or raised position.

Advantageously, according to the embodiment involving uprights 2, the bed 1 object of the present invention has a respective skid 425, stably fixed on the base 3, and capable of engaging with a respective belt 422 and sliding together with it along a rail of a respective upright 2.

Essentially, the rotation of the transmission shaft 421 results in the winding/unwinding of the belts 422 and the consequent translation of the respective skids 425 along the rails of the respective uprights 2.

The belts 422, in addition to assisting the translation of the base 3 from the lowered position to the raised position (and vice versa), allow to ensure the stability of the base 3 itself, supporting it in its entire width, avoiding overturning or oscillations. Advantageously, the battery 5 is removable from the base 3.

This characteristic allows for easier battery charging flexibility, for example, by removing and charging the battery in convenient and practical conditions. Advantageously, with reference to the attached figure 4, the bed 1 object of the present invention comprises charging means 8 for charging the battery 5.

Such charging means 8 for charging the battery 5 can be used to charge the battery 5 directly on the base 3. The presence of such charging means 8 contributes significantly to the operational autonomy and ease of use of the lifting bed.

In particular, such charging means 8 allow the battery 5 to be kept in an optimal state of charge, minimizing the need for a user to frequently remove the battery for external charging.

Therefore, this technical characteristic allows for a further optimization of the independence of the bed system, which is the object of the present solution. Advantageously, the charging means can also be used when it is removed from it.

Advantageously, the charging means 8 are of the induction type or of the male/female type or in any case contact type.

In the case where the charging means 8 are of the induction type, an embodiment provides that the transmission coil is arranged in a stable manner on a wall of the recreational vehicle and the reception coil is arranged in a stable manner on the base 3 of the bed 1, advantageously in proximity to the battery 5.

In this solution, the battery 5 charging operation occurs when the base 3 of the bed 1 is in the raised position.

In the case where the charging means 8 are of the male\female type (or in any case in contact) an embodiment provides that one of the two male or female connectors is arranged on the battery 5 or in proximity thereto and the other connector, vice versa, male or female, is connected directly to a respective battery charger not shown.

In this solution, the battery 5 charging operation occurs when the base 3 of the bed 1 is in any position or advantageously in the lowered position. Advantageously, the bed 1 object of the present invention comprises wireless actuation means of the movement means 4.

Advantageously, such wireless actuation means comprise a remote control.

Alternatively or in addition, the bed 1 object of the present invention comprises an actuation button obtained directly on the movement means 4.

The liftable bed for a recreational vehicle, which is the object of the present invention, overcomes the drawbacks of the prior art and offers significant advantages.

A first advantage of the liftable bed for recreational vehicles, object of the present invention, lies in its simple and cost-effective design.

Another advantage of the liftable bed for recreational vehicles, object of the present invention, is that it provides a solution capable of reducing the overall footprint and avoiding, or at least limiting, the presence of wiring inside the vehicle.

Another advantage of the liftable bed for recreational vehicles object of the present invention is that it makes the bed system itself independent.

Another advantage of the liftable bed for recreational vehicles, according to the present invention, is that it guarantees an aesthetic optimization of the bed itself, avoiding the presence of cables that are not always pleasing to the eye.

Another advantage of the present invention lies in its particular suitability for retrofit applications on existing recreational vehicles.

In particular, the configuration with the battery and related handling means entirely contained and integral with the (mobile) base of the bed eliminates the need for complex interventions on the original electrical system of the vehicle.

Therefore, the installation of the liftable bed no longer requires the installation of new power wiring from the vehicle's service battery to the bed area, which can be particularly difficult, expensive, and invasive in a vehicle that has already been equipped.

Therefore, an important advantage of the liftable bed object of the present invention is that it allows a recreational vehicle to be updated with a modern and functional electric liftable bed quickly, economically, and with minimal impact on the structure and the existing system.

## Claims

1. A liftable bed (1) of a recreational vehicle, comprising:
- a base (3) movable between at least one lowered position and at least one raised position;
- support and stabilization means to support said base (3) and stabilize it with respect to a wall of said recreational vehicle;
- movement means (4) for moving said base (3) between said lowered position and said raised position;
- a battery (5) for powering said movement means (4), said bed (1) being **characterized in that** said battery (5) is positioned directly on said base (3) and is integral with it, and by the fact that it includes means (8) for charging said battery (5), capable of recharging said battery (5) on said base (3).

2. The bed (1) according to claim 1, **characterized in that** said movement means (4) comprise:
- a motor (41) operatively connected to said battery (5) and powered by it;
- motion transmission means (42), operatively connected to said motor (41) and designed to move said base (3) between said lowered and raised positions.

3. The bed (1) according to the preceding claim, wherein said transmission means (42) comprise a transmission shaft (421) and **characterized in that** said support and stabilization means comprise at least two belts (422) configured to assist the translation of said base (3) between said lowered and raised positions, each of said belts (422) being partially wound on said shaft (421) and constrained on a first end (423) to a wall of said recreational vehicle and on a second end (424) to a stretch of said base (3) opposite to said wall of said recreational vehicle.

4. The bed (1) according to any one of the preceding claims, **characterized in that** said battery (5) is removable from said base (3).

5. The bed (1) according to the claim 1, **characterized in that** said charging means (8) are of the inductive type.

6. Bed (1) according to the preceding claim **characterized in that** said inductive charging means 8) comprise a transmission coil configured to be stably arranged on a wall of said recreational vehicle and a receiving coil stably arranged on said base (3) of said bed (1) in proximity to said battery (5).

7. The bed (1) according to any one of the preceding claims, **characterized in that** it comprises means for wireless actuation of said movement means (4).

8. The bed (1) according to claim 1, **characterized in that** said base comprises a profile (6) closed in a loop.

9. The bed according to the preceding claim, **characterized in that** it comprises a slat holder device configured to be constrained to said profile (6) of said base (3), and a plurality of slats (7) designed to be constrained to said slat holder device.

10. The bed (1) according to any of the preceding claims, **characterized in that** said support and stabilisation means comprise at least two uprights integral with said recreational vehicle, said base (3) being slidably engaged with said uprights.
